# EUROPEAN PATENT SPECIFICATION

(11) **EP 2 035 740 B1**
(45) Date of publication and mention of the grant of the patent: **14.10.2009**
(21) Application number: 07793892.6
(22) Date of filing: 20.06.2007
(51) Int. Cl.: F17C 9/04

(54) **METHOD AND PLANT FOR RE-GASIFICATION OF LNG**
VERFAHREN UND ANLAGE ZUR WIEDERVERDAMPFUNG VON VERFLÜSSIGTEM ERDGAS
PROCÉDÉ ET INSTALLATION DE RE-GAZÉIFICATION DE GAZ NATUREL LIQUÉFIÉ (GNL)

(30) Priority: 20.06.2006 NO 20062896
(43) Date of publication of application: 18.03.2009
(73) Proprietor: Aker Engineering & Technology AS, 1326 Lysaker (NO)
(72) Inventor: EIE, Rolf, 0382 Oslo (NO); VIGANDER, Kjell, 1358 Jar (NO)
(74) Representative: Balle, Morten
(86) International application number: PCT/NO2007/000218
(87) International publication number: WO 2007/148984

(56) References cited:
- EP-A- 0 580 910
- EP-A- 1 058 075
- WO-A-95/16105
- DE-A1- 2 062 003
- DE-A1- 2 307 004
- DE-A1- 2 651 851
- FR-A- 2 140 447
- US-A- 3 183 666
- US-A- 3 726 101
- US-A- 6 148 602

## Description

### The field of invention

The present invention relates to an environmental friendly re-gasification process for LNG. More specifically the invention relates to a method and plant for re-gasification of LNG, that allows for re-gasification of LNG with no, or substantially reduced, environmental impact, such as cooling of seawater and emission of CO₂ to the atmosphere.

### Technical background

LNG (Liquefied Natural Gas) is a method for transporting methane gas over long distances. The gas is liquefied prior to transport from the gas production location and is transported as a cooled liquid in LNG carriers. The tankers delivers the LNG to a LNG re-gasification terminal comprising LNG tanker unloading facilities, LNG storage tanks, re-gasification units and gas export pipeline(s).

The LNG has to be re-gasified before it can be transmitted through a pipeline distribution network. The re-gasification takes place in the re-gasification unit. Traditionally, two different vaporizing technologies are used in the re-gasification process. These are Submerged Combustion Vaporisers (SCV) using a burner as the heat source, and Open Rack Vaporizers (OVR) using seawater as the heat source. Additionally, heat exchangers for a closed loop heating medium system, using seawater and/or heat recovery from power systems or air as heat source, exist. The gas export pipeline pressure in all the mentioned units are achieved by high pressure pumps in the liquid LNG phase.

An SCV consists of a gas burner where part of the burner and the flue gas ducting are submerged in a water bed. The LNG vaporizer is also submerged in the heated water. A local fan attached to the SCV supplies necessary combustion air. This gives a very high heat exchange rate and a compact heat exchanger

An ORV is a battery of vertical radiators above a sump, where seawater is continuously flowing down the external faces of the radiators by gravity, as high pressure LNG is boiling inside. The amount of necessary seawater is dependent on the available (or allowable) temperature drop of the heating water discharge. For an ORV facility the two by far largest power consumption items are the LNG and seawater pumps.

A huge amount of seawater is needed with the normally limited temperature drop allowed in the seawater used as the heat source. The seawater inlets are equipped with fine meshed strainers to limit zooplankton and fish larvae to enter the seawater and vaporizer system. The seawater is dyed with hypochlorite to prevent marine growth in the piping system.

The seawater outlet is arranged with a huge diffuser to disperse the cooled water into the surrounding water mass, to prevent larger local temperature differences. However, in the later studies environmentalists have expressed objections to both intake/chlorination and outlet/temperature changes, since both have undesirable effects on the marine life. Additionally the seawater intake system is large, and thus costly since the water inlet velocity in the strainers is kept very low to limit the unfavorable effects on marine life.

However, it seems that the ORV in most cases is preferred as the main heat exchanger due to safety considerations and lower operational cost even though the capital expenditure is higher. In some studies the SCV has been suggested only as a back-up exchanger in case of extraordinary maintenance, peak demand periods or in periods when seawater is too cold to give sufficient gas vaporization.

The LNG Regasification terminal is normally powered by a modem, industrialized air plane derivative jet engine. These engines have low temperature burners where nitrogen is not oxidized and are run with a surplus of air to limit CO formation. The result is a flue gas with only traces of NO_{X}, CO and soot. The major part of the flue gas is then nitrogen and CO₂.

Such a terminal is disclosed in EP 0 580 910, considered as closest prior art.

The discharges to the atmosphere from power generation and from the SCVs has unfavorable effects on the air quality. It is attractive to locate the LNG receiving terminal as close as possible to the market. The market is normally in industrialized and populated areas where human activity already has major impact on the air quality. Many locations that would otherwise be attractive for a LNG receiving terminal may thus be found not acceptable for air quality reasons.

Additionally, the growing focus on CO₂ emission is of great concern. Accordingly, there is a need for a re-gasification method and plant which makes it possible to reduce or even eliminate the problems mentioned for the present solutions.

### Summary of the invention

According to a first aspect the invention relates to a method for re-gasification of LNG in which method natural gas is combusted in a burner to provide heat for evaporation of the LNG and where the heat is transferred from the burner to the LNG in a closed heat exchange system, wherein substantially pure oxygen is used in the combustion of natural gas, and that CO₂ is separated from the exhaust gas for export or deposition. The use of substantially pure oxygen for the combustion results in an exhaust gas comprising H₂O and CO₂, which makes it possible to separate the CO₂ by simple means, such as cooling the exhaust gas and condensation of the water vapor. This CO₂ may be compressed for deposition or further liquefied for bulk export.

According to one embodiment, cooled exhaust from the combustion is re-circulated into the combustion. Recirculation of cooled exhaust gas is used primarily to control the temperature in the combustion chamber but will also ensure a more complete combustion of the hydrocarbons in the combustion chamber.

According to another embodiment, the exhaust from the combustion mainly comprising CO₂ and H₂O is dried, compressed and liquefied to be separated to give liquid CO₂ for export or deposition. Drying of the exhaust gas removes water and leaves substantially pure CO₂. Liquefying of the CO₂ is especially preferable when the CO₂ is to be transported over long distances for example for injection into a field remote from the regasification plant.

According to another embodiment, the cooling and liquefying of the CO₂ for export is used to provide energy for gasification and heating of the LNG. By cooling and liquefying CO₂ against the cold LNG to be re-gasified, even more energy can be withdrawn from the exhaust, or more specifically the CO₂, before it is exported.

According a second aspect, the present invention provides for a plant for re-gasification of LNG, the plant comprising a gas fired burner for generation of heat for the regasification, a closed heat exchange system for transfer of heat from the burner to LNG to be vaporized, wherein the plant additionally comprises a air separation unit for generation of substantially pure oxygen to be fed to the burner.

According to an embodiment, the plant additionally comprises means to cool, dry and compress the CO₂ generated in the burner. Compressing and drying the CO₂ makes it possible to use it for injection into a gas or oil well for deposition in a depleted well, or pressure support to enhance he production in a producing well.

According to one embodiment, the plant comprises recirculation lines for recirculation of cooled exhaust gas from the burner into the burner to reduce the combustion temperature. Recirculation of exhaust gas improves the control over the combustion, both with regard to combustion temperature and complete combustion.

According to another embodiment, the plant also comprises a CO₂ liquefaction unit for liquefaction of CO₂ for export from the plant. A CO₂ liquefaction unit is especially preferable if the re-gasification plant placed far from possible injection or deposition sites.

The plant may additionally comprise power generating means for generation of electrical power. A re-gasification plant has a need for electrical power and the power generating means may be dimensioned for the need of the plant. Additionally, electrical power may be exported from the plant.

According to a third aspect, the present invention provides for the use of LNG for cooling air in an air separation unit to produce substantially pure oxygen. The use of the cold LNG for cooling of the air for the air separation unit avoids or reduces the need for additional cooling of the incoming air, and adds heat to the re-gasification, to improve the energy efficiency of the plant.

According to one embodiment, other air gases such as argon, nitrogen, helium are separated in the air separation unit for other uses or sales. The separation of other air gases may improve the total energy efficiency and profitability of the plant.

### Short description of the figures

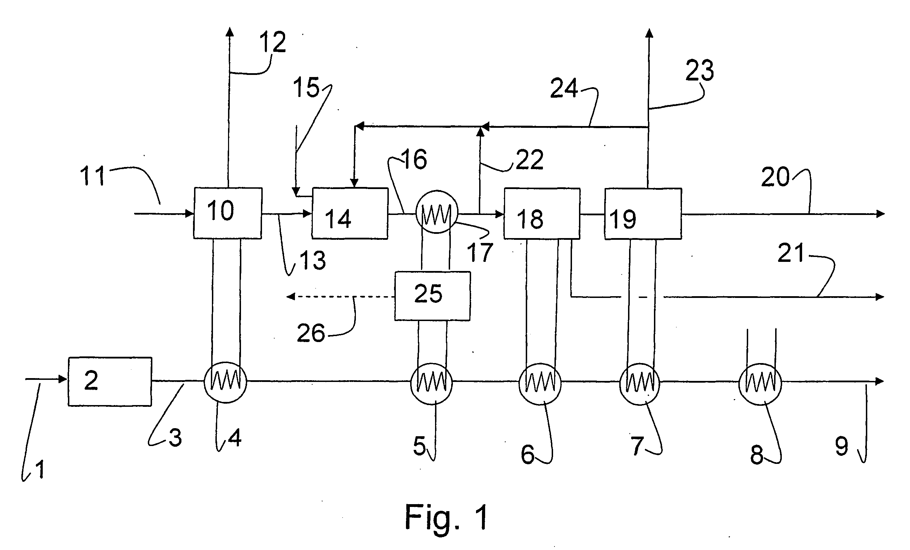

Figure 1 is a flow schematic diagram illustrating the present invention.

### Detailed description of the invention

Figure 1 illustrates the principle of the present regasification process and plant. LNG is delivered from tankers to a terminal and enters the plant through a LNG supply line 1 into a LNG storage 2. The LNG storage 2 comprises the necessary piping, tanks and in tank pumps for internal transport, storage and pumping the LNG from the storage 2 into a LNG line 3 by high pressure LNG pumps. The high pressure LNG in line 3 is heated in several heat exchangers, here illustrated by in an air cooler 4, a steam condenser 5, a CO₂ cooler 6, a CO₂ condenser 7 and a utility cooler 8, before the re-gasified LNG leaves the plant in a gas export line 9.

Air entering an air intake 11 into an air separation unit (ASU) 10 is cooled against the LNG in the air cooler 4. In the ASU 10, air is cryogenically separated into substantially pure oxygen, which leaves the ASU through an oxygen line 13, and nitrogen and other air gases, which are released into the atmosphere through a nitrogen line 12 unless other industrial uses can be found for the nitrogen locally. The expression "substantially pure oxygen" is in the present application used for an oxygen enriched gas having an oxygen content of more than 90 %, preferably more than 95% and most preferably more than 98%.

The oxygen in the oxygen line 13 is introduced into a burner 14, wherein the oxygen is used for generation of heat through combustion of natural gas which enters the burner 14 through a natural gas line 15. The hot exhaust gas from the burner 14 is cooled in a heat exchanger 17 against a heat exchange medium in a closed steam and power system 25. Said heat exchange medium in the closed system 25 is again used to transfer heat from the hot exhaust gas to the LNG in the steam condenser 5 mentioned above as well as to supply sufficient power in the steam turbine and generator 25 to feed the terminal, as indicated by the line 26.

The partly cooled exhaust gas, mainly comprising water vapor and CO₂, is dried to remove H₂O, compressed and cooled in a CO₂ dryer and compressor train 18. The gas in the dryer and compressor train, mainly comprising CO₂, is cooled against the LNG in the CO₂ cooler 6. H₂O that is condensed in the dryer and compressor train is removed in a H₂O line 21. The dried and compressed CO₂ from the dryer and compressor train 18, is thereafter liquefied in a CO₂ liquefaction unit 19. The gas in the liquefaction unit 19 is also cooled by heat exchanging in the CO₂ condenser 7, against the LNG in the LNG line.

Liquefied CO₂ leaves the CO₂ liquefaction unit 19 in a CO₂ line 20, and is sent for export, e.g. for injection into an oil field for enhanced oil production or to be deposited into a depleted oil or gas field or used for industrial purposes. A limited amount of flue gas comprising CO₂, N₂, Ar and O₂, is not condensed in the liquefaction unit, is split into two streams, one being released into the atmosphere through a stack 23 to avoid enrichment of N₂ and Ar in the process, and the other stream is re-circulated in a CO₂ recirculation line 24 into the burner 14.

A major part of the cooled exhaust leaving the heat exchanger 17 is re-circulated in a recirculation line 22 back to the burner 14. The reasons to re-circulate exhaust gas are several. Firstly, the re-circulated exhaust gas acts as a substantially inert gas in the burner. Combustion of natural gas and substantially pure oxygen would result in far too high combustion temperatures for existing burners and heat exchangers. The recirculation of cooled exhaust makes it possible to control the combustion temperature. Secondly, by re-circulating the exhaust, any remaining combustible materials in the exhaust will be combusted resulting in a more total combustion in the burner. Thirdly, the inert gas adds heat capacity to the exhaust gas and thus enhances the heat transfer in the heat exchangers.

Heat from the closed steam and power system that is not used for heating the LNG will be used for terminal power production as indicated by line 26 in a steam turbine to make the terminal self sufficient of electrical power. Power generation in a gas turbine would be favored as it would yield a higher efficiency for power generation but gas turbine technology is not yet mature for power generation at the high temperatures achieved by fueling by methane and pure oxygen.

The utility cooler 8 indicates one or more heat exchangers that is/are used for cooling of different process equipment that needs cooling, and may comprise coolers for lubrication oil, hvac-cooling, etc, to avoid using sea water for cooling purposes..

The skilled man in the art will understand that each of the heat exchangers / coolers 4, 5, 6, 7, 8 illustrated in figure 1 may comprise several heat exchangers. The actual configuration of heat exchangers will be subject to optimization both with regard to the number and size of the heat exchangers. Additionally, the relative position of the different heat exchangers 4, 5, 6, 7, 8 may be changed due to optimalization of a plant.

The burner may be any kind of burner such as a combustion chamber, a boiler or a modem industrialized gas turbine.

### Example

An exemplary LNG re-gasification plant for the re-gasification of 1717 t/h (2 BSCFD) of LNG, has been simulated.

The non discharge regasification system as explained above has been estimated for an LNG facility with 1717t/h (2BSCF/D) sales gas (9). The burner (14) will require additional 23.4 t/h of natural gas (15) to be burned with 93.1 t/h pure oxygen (13). Almost 700t/h CO₂ is recirculated to the burner (22 and 24). A vent line from the CO₂ liquefaction unit discharge 2.5t/h, mostly CO₂ with some N₂, Ar and O₂, to the atmosphere (23).

The steam power system (25) produce the 55MW electrical power (26) required by the Regasification plant. In addition to the sales gas, the plant further produce:
➢ About 50t/h liquefied CO₂ at -38°C from the liquefaction unit (19).
➢ About 50t/h fresh water from the CO₂ dryer train (18).
➢ The large amount of N₂ vent (12) to the atmosphere from the ASU (10) is not regarded as a pollutant

The "Non-Discharge Regas Process" has no need for seawater for cooling or heating purposes. A Regasification plant utilizing ORV vaporizers may require about 50000 t/h of treated seawater for the same capacity.

CO₂ is dried before and during compression in two stages to a pressure of 15 bars in the dryer and compressor train unit 18. The CO₂ is then dried to avoid formation of ice in the liquefaction system. The next step, in the CO₂ liquefaction unit 19, is to cool the CO₂ to -30.8 °C, where it is liquefied and may be pumped, stored and offloaded more easily. The cooling is done in a column with the LNG cooled condenser 7. The CO₂ rich exhaust is entering close to the bottom of the column, liquid CO₂ is extracted from the bottom and oxygen/nitrogen/argon comes out at the top. The column enables a low CO₂ concentration in the top product (7.2 mol%). 50% of the top product is emitted to atmosphere (2500 kg/hr) in order to avoid enrichment of nitrogen/argon (which gets into the process as an impurity in the oxygen).

The air separation unit (10) in the 'non-discharge' regasification process described above, discharge cooled nitrogen gas enriched in argon, to the air (12). Nitrogen and argon could then be separated and further refined and bottled to give industrial gases as a by-product. Also liquid nitrogen has a limited marked as a cooling medium.

A fraction of the CO₂ stream could also be processed to give dry ice as a product, which may be sold as a cooling medium.

The proposed 'emission free' terminal is not quite emission free. Of process technical reasons a small amount of N₂, CO₂ and Ar is vented to prevent accumulation of N₂ and Ar in the recycle loop. A fraction of this is CO₂ carried over from the liquefaction column. The only effluent from the terminal to the sea is cleaned grey water and drains from the facility.

The captured CO₂ is liquefied and can be exported in bulk or by pipe line. However, the terminal is dependent of having a customer for the CO₂ which could be a near by oilfield where the CO₂ can be injected, otherwise the cost of getting rid of the CO₂ will be economically unfeasible. The CO₂ can preferably be injected for enhanced oil recovery, or just stored in a depleted field or salt dome. This will limit possible sites for an 'emission free' terminal. In many cases though, an LNG regasification terminal may be located close to and utilise an existing gas pipeline to minimize pipeline costs. The gas pipeline often originates from production platforms where CO₂ may be beneficial for injection. For limited periods under special conditions, it may be that CO₂ cannot be exported. Then the CO₂ will be discharged to the atmosphere with less unfavourable impacts on the air quality than with traditional technologies.

## Claims

1. A method for re-gasification of LNG, the method comprising the steps of:
• introducing natural gas and substantially pure oxygen into a burner,
• withdrawing an exhaust gas mainly comprising CO₂ and H₂O from the burner,
• transferring heat in a closed heat exchange system from the burner to the LNG for evaporation of the LNG,
• cooling and drying the exhaust gas to give CO₂ for export or deposition.

2. The method according to claim 1, wherein the substantially pure oxygen has an oxygen content of more than 90%.

3. The method according to claim 1 or 2, wherein the cooled and dried exhaust gas is compressed and cooled against LNG to give liquid CO₂ for export or deposition.

4. The method of any of the claims 1 to 3, wherein cooled exhaust is re-circulated into burner.

5. A plant for re-gasification of LNG, the plant comprising a gas fired burner (14) for generation of heat for the re-gasification, a closed heat exchange system (5, 17,25) for transfer of heat from the burner to LNG to be vaporized, **characterised in that** the plant additionally comprises a air separation unit (10) for generation of substantially pure oxygen to be fed to the burner (14) to produce an exhaust gas mainly comprising H₂O and CO₂, and means to cool and dry the exhaust gas to give CO₂.

6. The plant according to claim 5, wherein the plant additionally comprises means to compress the CO₂.

7. A plant according to claim 5 or 6, **characterised in that** the plant comprises recirculation lines (22, 24) for recirculation of cooled exhaust gas into the burner to reduce the combustion temperature.

8. A plant according to any of the claims 5 to 7, **characterised in that** the plant also comprises a CO₂ liquefaction unit (19) for liquefaction of CO₂ for export from the plant.

9. A plant according to any of the claims 5 to 8, **characterise in that** the plant additionally comprises power generating means for generation of electrical power.

## Patentansprüche

1. Verfahren zum Wiedervergasen von verflüssigtem Naturgas,
wobei das Verfahren die folgenden Schritte umfasst:
• Einführen von Naturgas und im Wesentlichen reinem Sauerstoff in einen Brenner,
• Entziehen eines hauptsächlich CO₂ und H₂O umfassenden Abgases aus dem Brenner,
• Übertragen von Wärme in einem geschlossenem Wärmetauschsystem vom Brenner zum verflüssigten Naturgas zum Verdampfen des verflüssigten Naturgases,
• Kühlen und Trocknen des Abgases, um CO₂ zum Austrag oder zur Ablagerung zu ergeben.

2. Verfahren nach Anspruch 1, wobei der im Wesentlichen reine Sauerstoff einen Sauerstoffanteil von mehr als 90% aufweist.

3. Verfahren nach Anspruch 1 oder 2, wobei das gekühlte und getrocknete Abgas gegen das Flüssigerdgas komprimiert und gekühlt wird, um flüssiges CO₂ zum Austrag oder zur Ablagerung zu ergeben.

4. Verfahren nach einem der Ansprüche 1 bis 3, wobei gekühltes Abgas in den Brenner rezirkuliert wird.

5. Anlage zum Wiedervergasen von verflüssigtem Naturgas, wobei die Anlage einen gasbefeuerten Brenner (14) zum Erzeugen von Wärme zur Wiedervergasung, ein geschlossenes Wärmetauschersystem (5, 17, 25) zur Wärmeübertragung vom Brenner zum zu verdampfenden verflüssigten Naturgas umfasst, **dadurch gekennzeichnet, dass** die Anlage zusätzlich eine Lufttrenneinheit (10) zum Erzeugen von im Wesentlichen reinem Sauerstoff, welcher dem Brenner (14) zum Herstellen eines im Wesentlichen H₂O und CO₂ umfassenden Abgases zuzuführen ist, und Mittel zum Kühlen und Trocknen des Abgases, um CO₂ zu ergeben, umfasst.

6. Anlage nach Anspruch 5, wobei die Anlage zusätzlich Mittel zum Komprimieren des CO₂ umfasst.

7. Anlage nach Anspruch 5 oder 6, **dadurch gekennzeichnet, dass** die Anlage Rezirkulationsleitungen (22, 24) zum Rezirkulieren von gekühltem Abgas in den Brenner zum Reduzieren der Verbrennungstemperatur umfasst.

8. Anlage nach einem der Ansprüche 5 bis 7, **dadurch gekennzeichnet, dass** die Anlage ferner eine CO₂-Verflüssigungseinheit (19) zum Verflüssigen von CO₂ zum Austrag aus der Anlage umfasst.

9. Anlage nach einem der Ansprüche 5 bis 8, **dadurch gekennzeichnet, dass** die Anlage zusätzlich Energieerzeugungsmittel zum Erzeugen elektrischer Energie umfasst.

## Revendications

1. Procédé de re-gazéification de GNL, le procédé comprenant les étapes suivantes :
- l'introduction de gaz naturel et d'oxygène pratiquement pur dans un brûleur,
- le retrait d'un gaz d'échappement comprenant principalement du CO₂ et du H₂O provenant du brûleur,
- le transfert de chaleur dans un système d'échange de chaleur fermé du brûleur vers le GNL pour évaporer le GNL,
- le refroidissement et le séchage du gaz d'échappement pour donner du CO₂ pour l'export ou le dépôt.

2. Procédé selon la revendication 1, dans lequel l'oxygène pratiquement pur a une teneur en oxygène de plus de 90 %.

3. Procédé selon la revendication 1 ou 2, dans lequel le gaz d'échappement refroidi et sec est comprimé et refroidi au contact du GNL pour donner du CO₂ liquide pour l'export ou le dépôt.

4. Procédé selon l'un quelconque des revendications 1 à 3, dans lequel le gaz d'échappement refroidi est remis en circulation dans le brûleur.

5. Installation de re-gazéification de GNL, l'installation comprenant un brûleur à gaz (14) pour générer de la chaleur pour la re-gazéification, un système d'échange de chaleur fermé (5, 17, 25) pour transférer la chaleur du brûleur au GNL à vaporiser, **caractérisé en ce que** l'installation comprend en outre une unité (10) de séparation d'air pour générer de l'oxygène pratiquement pur à introduire dans le brûleur (14) afin de produire un gaz d'échappement comprenant principalement du H₂O et du CO₂, et des moyens pour refroidir et sécher le gaz d'échappement pour donner du CO₂.

6. Installation selon la revendication 5, dans laquelle l'installation comprend en outre des moyens pour comprimer le CO₂.

7. Installation selon la revendication 5 ou 6, **caractérisée en ce que** l'installation comprend des lignes de recirculation (22, 24) pour remettre en circulation le gaz d'échappement refroidi dans le brûleur afin de réduire la température de combustion.

8. Installation selon l'une quelconque des revendications 5 à 7, **caractérisé en ce que** l'installation comprend également une unité (19) de liquéfaction de CO₂ pour liquéfier le CO₂ pour l'export à partir de l'installation.

9. Installation selon l'une quelconque des revendications 5 à 8, **caractérisé en ce que** l'installation comprend en outre des moyens de production d'énergie pour produire de l'électricité.
